# FASCICULE DE BREVET EUROPEEN

(11) **EP 3 645 400 B1**
(45) Date de publication et mention de la délivrance du brevet: **11.08.2021**
(21) Numéro de dépôt: 18783406.4
(22) Date de dépôt: 01.10.2018
(51) Int. Cl.: B64G 1/22, B64G 1/62, B64G 1/44, E04H 15/20, H01Q 1/08, H01Q 1/28

(54) **MAT DEPLOYABLE DE SATELLITE**
AUSBAUBARE SATELLITENMAST
DEPLOYABLE SATELLITE MAST

(30) Priorité: 04.10.2017 FR 1759266
(43) Date de publication de la demande: 06.05.2020
(73) Titulaire: ArianeGroup SAS, 75015 Paris (FR)
(72) Inventeur: VILLEMAIN, Alexis, 33160 Saint Medard en Jalles (FR)
(74) Mandataire: Brevalex
(86) Numéro de dépôt international: PCT/EP2018/076664
(87) Numéro de publication internationale: WO 2019/068649

(56) Documents cités:
- WO-A1-2006/136675
- JP-A- H03 197 300
- US-A- 3 606 719
- US-A1- 2004 194 397
- US-A1- 2009 260 301
- LEFEVRE Y M ET AL: "DESIGN SOLUTIONS FOR INGLATABLE SPACE STRUCTURES", CONGRESS OF THE INTERNATIONAL ASTRONAUTICAL FEDERATION, XX, XX, 29 septembre 2003 (2003-09-29), pages 1-08, XP001207789,

## Description

### Domaine de l'invention

La présente invention concerne les supports de structures pour satellites de type mât déployable par gonflage.

### Arrière plan technologique

Un type de mâts déployable par gonflage est connu dans le domaine spatial. Ce mât est un tube gonflable plié en accordéon suivant un motif tétragonal avant déploiement et de forme cylindrique après déploiement. Un tel mât supporte une structure déployée lorsque le satellite est à poste et peut être rigidifié après gonflage comme décrit dans le document FR 2876983 A1.

Son déploiement peut être en outre commandé par une structure interne telle que décrite dans le document FR 2877315 A1.

De tels mâts peuvent être réalisés à partir de films métalliques, de composites et sont dépliés grâce à l'augmentation de pression d'un gaz injecté à leur base. La pression pousse sur la face supérieure du tube et permet au mât de s'allonger jusqu'à obtenir une forme cylindrique.

Ils sont utilisables notamment pour porter des structures comme des panneaux formant des voiles, par exemple des panneaux d'aide à la désorbitation comme décrits dans le document FR3032183 A1.

D'autres mats analogues sont connus du document Lefevre Y M et Al « Design solutions for inflatable space structures » Congress of the International Astronautical Federation, 29 septembre 2003, et des documents de brevets US3606719 et JPH03197300.

### Brève description de l'invention

La présente invention se place dans le cadre de la réalisation d'un mât support de structures importantes telles que des panneaux solaires. Les panneaux solaires de satellites doivent offrir une surface de captation de lumière importante ce qui conduit à des contraintes importantes au niveau d'un mât les portants. Un tel mât doit donc être rigidifié et son déploiement doit être mieux maitrisé notamment pour garantir un déploiement correct et uniforme des panneaux solaires.

Dans ce cadre, la présente invention propose un mât déployable pour satellite comme divulgué dans la revendication 1.

Avantageusement, au moins certains des haubans se fixent sur l'extrémité libre du tube devenant le sommet du mât après déploiement.

De manière alternative ou complémentaire, au moins certains des haubans se fixent sur une partie intermédiaire du tube.

Le dispositif de rigidification peut comprendre au moins deux paires de haubans disposées dans des plans sécants au niveau de l'axe du mât et faisant entre eux un angle non nul.

Selon un mode de réalisation particulier, le ou les haubans sont des cordes dont la composition comprend des polymères se solidifiant par irradiation UV ou des cordes rigidifiables par polymérisation par effet joule.

Le dévidoir peut en outre comporter un dispositif frein de maintien en tension des haubans lors du déploiement du mât.

Avantageusement, à la base du mât, les haubans peuvent être tenus écartés du mât par des bras formés par des poutres fixes ou des tiges repliables perpendiculaires ou inclinées par rapport au mât.

Selon un mode de réalisation particulier, au moins un ressort est disposé soit en haut des haubans soit en fin de hauban côté dévidoir soit des deux côtés.

Avantageusement, des languettes souples percées en leur milieu pour laisser passer le câble peuvent entourer un câble dans le mât.

### Brève description des dessins

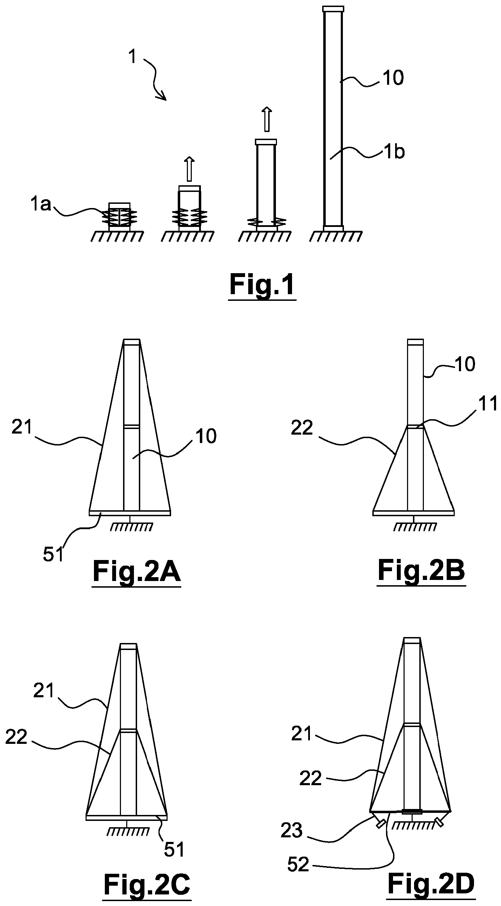

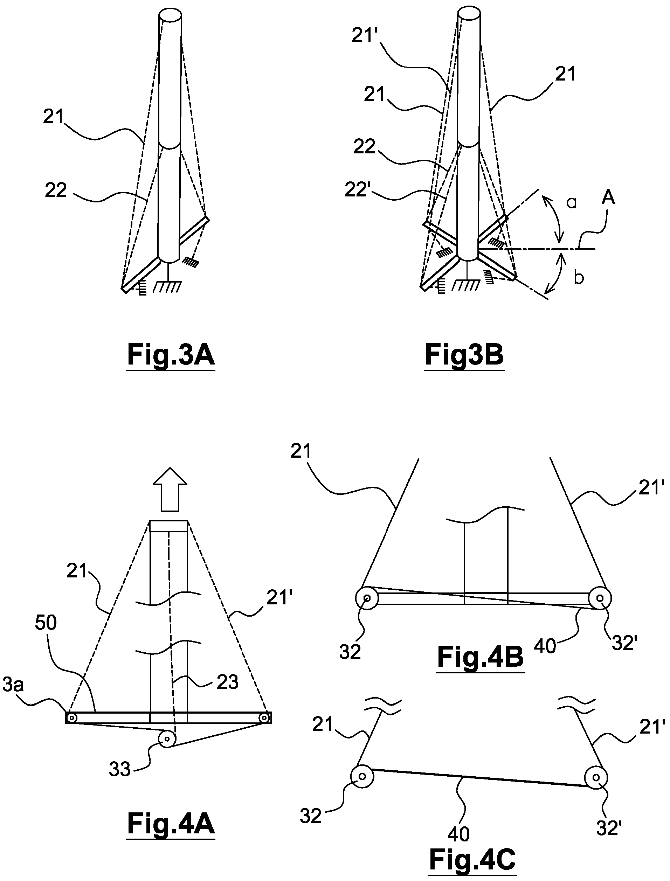

D'autres caractéristiques et avantages de l'invention seront apparents à la lecture de la description qui suit d'exemples non limitatifs de réalisation de l'invention en référence aux dessins qui représentent:
en figure 1, une représentation schématique du déploiement d'un mât de l'art antérieur;
aux figures 2A à 2D, des exemples schématiques en vue de côté de modes de réalisation de mâts selon l'invention;
aux figures 3A et 3B, des vues en perspectives d'exemples de réalisation de l'invention;
à la figure 4A, un mode de réalisation de dévidoir selon l'invention;
aux figures 4B et 4C, qui représentent des exemples de dévidoirs ne tombant pas dans le champ d'application de la présente invention;
aux figures 5 et 7 qui représentent des modes de réalisation d'un dévidoir unique selon l'invention;
à la figure 6 qui représente un exemple de dévidoirs ne tombant pas dans le champ d'application de la présente invention;
en figure 8, un exemple de réalisation particulier du mât.

### Description détaillée de modes de réalisation de l'invention

La présente invention se rapporte aux structures pouvant se déployer sur satellite comme par exemple une structure pouvant notamment supporter des panneaux solaires et adaptée à supporter les contraintes et les déformations générées par de ces panneaux telles que les contraintes et déformations générées par l'environnement thermique et les mouvements du satellite. Elle répond à des besoins techniques qui sont d'aider au guidage du mât lors de son déploiement et d'apporter de la raideur au mât après déploiement.

L'invention concerne un mât déployable 1 tel que schématisé en figure 1 et constitué principalement d'un tube gonflable 10, stocké en accordéon 1a avant déploiement, et déployable par remplissage du tube au moyen d'un gaz selon une séquence telle que représentée, le tube déployé 1b formant une structure porteuse.

Pour aider au déploiement du tube et le rigidifier, l'invention prévoit des haubans externes au tube comme représenté aux figures 2A à 2C.

Les haubans sont des structures souples de type câble ou fil pouvant être réalisés à partir de différents matériaux : métal, composite, polymères, etc.

La figure 2A représente un mât déployé pourvu d'une paire de haubans 21 qui se fixent sur l'extrémité libre du tube 10 devenant le sommet du mât après déploiement.

La figure 2B représente un mât déployé comportant une paire de haubans 22 fixés sur une partie intermédiaire du tube déployé.

La figure 2C représente un mât déployé comportant deux paires de haubans 21, 22. Une paire de haubans 21 est fixée en haut de mât et une paire de haubans 22 est fixée sur une partie intermédiaire du tube déployé.

Dans l'exemple des figures 2A à 2C, la partie basse des haubans est fixée à distance du mât sur des poutres fixes 51. Dans l'exemple de la figure 2D la partie inférieure des haubans est tenue écartée du mât par des tiges repliables 52 éventuellement perpendiculaires au mât et des brins inférieurs 23 des haubans servent à tendre les haubans.

Le dispositif de rigidification et d'aide au déploiement externe au mât de l'invention comporte selon la figure A, un dévidoir sur lequel les haubans sont enroulés lorsque le tube est stocké plié et à partir desquels les haubans se déroulent lors du déploiement du mât.

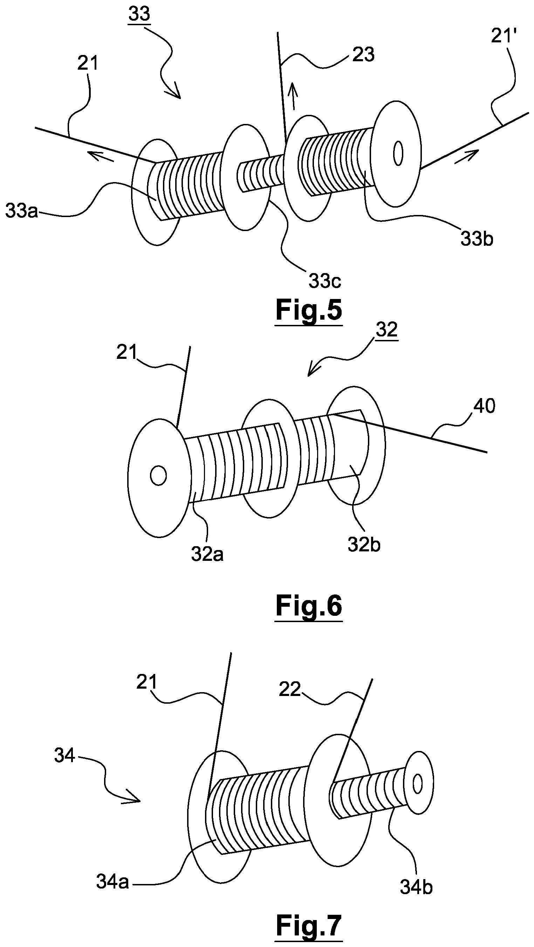

Ainsi, selon la figure 4A, un dévidoir unique 33 reçoit deux haubans 21, 21' d'une paire de haubans coplanaires sur des cylindres d'enroulement ou bobineaux 33a, 33b à sens d'enroulements opposés et des poulies 3a en bout de poutres 50 guident les haubans. Le dévidoir est par exemple tel que représenté en figure 5. Ce dévidoir est un dévidoir triple qui comporte un premier cylindre 33a d'enroulement d'un premier hauban d'une paire de haubans, un deuxième cylindre 33b d'enroulement d'un second hauban de la paire de haubans et, dans ce mode de réalisation, d'un troisième cylindre 33c recevant un câble interne au tube et accroché à l'extrémité libre du tube et servant à commander le débobinage des haubans lors du déploiement du mât, l'extrémité libre du tube tirant sur le câble interne. Dans cette configuration, le diamètre des cylindres est adapté de sorte que le déroulement des haubans soit synchronisé avec le déploiement du mât.

Dans des exemples selon les figures 4B et 4C ne tombant pas dans le champ d'application de la présente invention, chaque hauban de la paire de haubans comporte un dévidoir 32, 32' contrarotatifs. Ces dévidoirs sont synchronisés par un câble de liaison 40 les reliant plus particulièrement représenté en figure 4C. Ce câble de liaison 40 se déroule à partir d'un premier cylindre d'enroulement ou bobineau sur un premier dévidoir, par exemple le dévidoir 32 et s'enroule sur un second cylindre d'enroulement ou bobineau sur le second dévidoir, par exemple le dévidoir 32' pendant le déploiement du mât. Dans ce cas, les dévidoirs sont réalisés selon l'exemple de la figure 6. Ils comportent un premier cylindre d'enroulement 32a recevant le hauban 21, un second cylindre d'enroulement recevant le câble de liaison 40.

Le dévidoir représenté à la figure 7 est un mode de réalisation de dévidoir unique selon l'invention, recevant un hauban de tête 21 et un hauban 22 s'accrochant sur une partie intermédiaire du mât. Dans ce cas le rapport des diamètre des cylindres d'enroulement recevant les haubans est adapté pour conserver une tension identique pour ces haubans lors du déploiement du mât.

Les haubans peuvent être des câbles souples de différents matériaux, métallique, composite, polymères, etc. ou des cordes rigidifiables telles que ou des cordes rigidifiables par polymérisation par effet joule après circulation d'un courant électrique dans la corde. Un autre mode de réalisation peut employer des haubans comportant un matériau polymérisable sous UV. Dans ce dernier cas, une fois déroulés et soumis à l'irradiation UV du soleil, les haubans peuvent se rigidifier et encore mieux contribuer au maintien érigé du mât.

Toujours dans l'optique de contrôler le déploiement du mât, le ou les dévidoirs peuvent comporter un dispositif frein de maintien en tension des haubans lors du déploiement du mât.

La figure 3A décrit en perspective une réalisation à deux paires de haubans coplanaires disposés à 180° par rapport à l'axe du mât.

Selon la figure 3B le dispositif de rigidification comprend quatre paires de haubans 21, 21', 22, 22' disposées deux par deux dans des plans sécants au niveau de l'axe du mât. Dans l'exemple, en prenant un plan P défini par le mât et une droite A perpendiculaire au mât, plan dans lequel se trouvent par exemple les panneaux solaire, le plan comportant une première paire de haubans fixés en haut du mât et une première paire de haubans fixés en partie intermédiaire du mât fait avec le plan P un angle α alors que le plan comportant la seconde paire de haubans fixés en haut du mât et la seconde paire de haubans fixés en partie intermédiaire du mât fait un angle β avec le plan P.

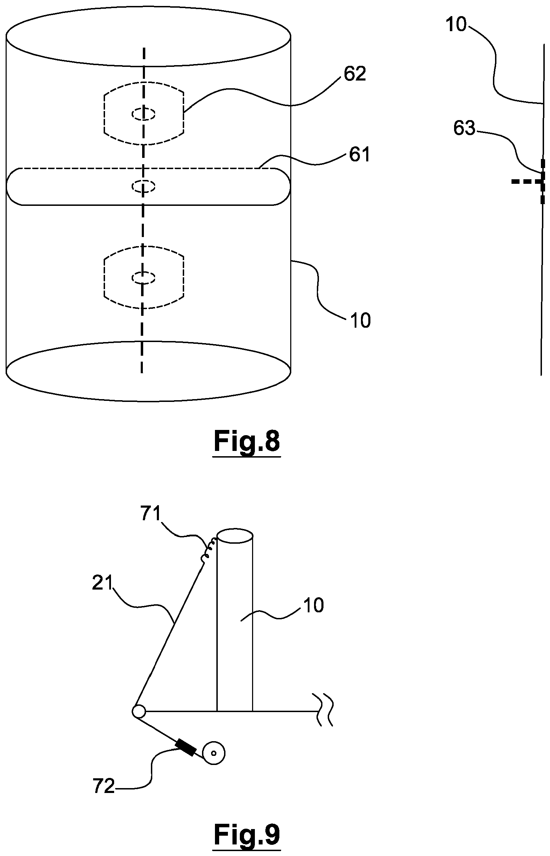

Selon l'exemple de la figure 9, pour encaisser les dilatations thermiques des haubans en fonction de leur matériau, les dilatations thermiques du mât en élongation, le flottement du hauban opposé à l'autre qui travaillerait en traction, on apporte une légère tension en fin de déploiement, sans brider la plastification par gonflage du mât, en ajoutant des ressorts soit en haut des haubans, comme le ressort 71, soit en fin de hauban, comme le ressort 72 côté dévidoir, soit des deux côtés. Les ressorts peuvent être de type ressort à boudin ou de type câble élastique en partie haute du hauban. Par contre en partie basse du hauban, comme le ressort est au départ enroulé sur le dévidoir, un ressort de type câble élastique agissant alors après dévidage complet des haubans sera préféré.

Dans le cas où un câble central est positionné à l'intérieur du tube il faut trouver un moyen d'éviter que le câble frappe la paroi du mât après déploiement. Il est dans ce cas possible de positionner comme représenté en figure 8 des languettes souples 61, 62, par exemple en kapton, percées en leur milieu pour laisser passer le câble. Ces languettes qui entourent le câble peuvent notamment être collées entre les plis du mât selon le repère 63.

L'invention propose donc un haubanage du mât qui apporte de la raideur au mât en flexion et traction après déploiement et un déroulement synchronisé des haubans qui apporte une aide dans le guidage du mât lors du déploiement du mât.

## Revendications

1. Mât déployable pour satellite constitué d'un tube gonflable (1) stocké en accordéon (1a) avant déploiement (1b) et déployable par remplissage du tube au moyen d'un gaz **caractérisé en ce qu'**il comporte un dispositif de rigidification et d'aide au déploiement externe au mât, ledit dispositif comportant plusieurs haubans (21, 22) enroulés sur un dispositif dévidoir (3, 31 , 32, 33, 34) du côté d'une première de leurs extrémités et accrochés sur le tube à une seconde de leurs extrémités, lesdits haubans se déroulant à partir du dévidoir lors du déploiement du mât, ce dispositif comprenant au moins une paire de haubans disposés à 180° par rapport à l'axe du mât, les haubans de la paire de haubans étant enroulés sur un dispositif dévidoir unique (33).

2. Mât déployable selon l'une quelconque des revendications précédentes pour lequel au moins certains des haubans (21) se fixent sur l'extrémité libre du tube devenant le sommet du mât après déploiement.

3. Mât déployable selon l'une quelconque des revendications précédentes pour lequel au moins certains des haubans (22) se fixent sur une partie intermédiaire du tube.

4. Mât déployable selon l'une quelconque des revendications précédentes pour lequel le dispositif de rigidification comprend au moins deux paires de haubans (21, 22, 21', 22') disposées dans des plans sécants au niveau de l'axe du mât.

5. Mât déployable selon l'une quelconque des revendications précédentes pour lequel le ou les haubans sont des cordes dont la composition comprend des polymères se solidifiant par irradiation UV ou des cordes rigidifiables par polymérisation par effet joule.

6. Mât déployable selon l'une des revendications précédentes pour lequel le dévidoir comporte un dispositif frein de maintien en tension des haubans lors du déploiement du mât.

7. Mât déployable selon l'une quelconque des revendications précédentes pour lequel à la base du mât, les haubans sont tenus écartés du mât par des bras (50) formés par des poutres fixes (51) ou des tiges repliables (52) perpendiculaires ou inclinées par rapport au mât.

8. Mât déployable selon l'une quelconque des revendications précédentes pour lequel au moins un ressort (71, 72) est disposé soit en haut des haubans(71) soit en fin de hauban côté dévidoir (72) soit des deux côtés.

9. Mât déployable selon l'une quelconque des revendications précédentes pour lequel des languettes souples (61, 62) percées en leur milieu pour laisser passer un câble dans le mât entourent ledit câble.

## Patentansprüche

1. Ausfahrbarer Satellitenmast, der aus einem aufblasbaren Schlauch (1) besteht, der vor dem Ausfahren (1b) in Ziehharmonikaform (1a) gelagert und durch Füllen des Schlauchs mit einem Gas ausfahrbar ist,
**dadurch gekennzeichnet, dass** er eine außerhalb des Masts liegende Vorrichtung zur Versteifung und zur Unterstützung des Ausfahrens aufweist, wobei die Vorrichtung mehrere Abspannungen (21, 22) enthält, die auf einer Haspelvorrichtung (3, 31, 32, 33, 34) auf der Seite eines ersten ihrer Enden aufgewickelt und mit einem zweiten ihrer Enden an dem Schlauch verhakt sind, wobei sich die Abspannungen während des Ausfahrens des Mastes von der Haspel abwickeln, wobei diese Vorrichtung zumindest ein Paar von Abspannungen enthält, die unter 180° zur Mastachse angeordnet sind, wobei die Abspannungen des Paares von Abspannungen auf einer einzigen Haspelvorrichtung (33) aufwickelt sind.

2. Ausfahrbarer Mast nach dem vorhergehenden Anspruch, wobei zumindest einige der Abspannungen (21) an einem freien Ende des Schlauchs befestigt sind, das nach dem Ausfahren die Mastspitze wird.

3. Ausfahrbarer Mast nach einem der vorhergehenden Ansprüche, wobei zumindest einige der Abspannungen (22) an einem Zwischenteil des Schlauchs befestigt sind.

4. Ausfahrbarer Mast nach einem der vorhergehenden Ansprüche, wobei die Versteifungsvorrichtung zumindest zwei Paare von Abspannungen (21, 22, 21', 22') enthält, die in Schnittebenen im Bereich der Mastachse angeordnet sind.

5. Ausfahrbarer Mast nach einem der vorhergehenden Ansprüche, wobei die Abspannung bzw. die Abspannungen Seile sind, deren Zusammensetzung Polymere umfasst, die sich durch UV-Bestrahlung verfestigen, oder Seile, die durch Polymerisation durch Joule-Effekt versteifbar sind.

6. Ausfahrbarer Mast nach einem der vorhergehenden Ansprüche, wobei die Haspel eine Bremsvorrichtung zur Aufrechterhaltung der Spannung der Abspannungen beim Ausfahren des Mastes enthält.

7. Ausfahrbarer Mast nach einem der vorhergehenden Ansprüche, wobei die Abspannungen an der Basis des Mastes durch Arme (50), die aus festen Balken (51) oder umlegbaren Stäben (52) gebildet sind, die senkrecht oder schräg zum Mast verlaufen, vom Mast beabstandet gehalten werden.

8. Ausfahrbarer Mast nach einem der vorhergehenden Ansprüche, wobei zumindest eine Feder (71, 72) entweder an der Oberseite (71) der Abspannungen oder am haspelseitigen Ende (72) der Abspannungen oder an beiden Seiten angeordnet ist.

9. Ausfahrbarer Mast nach einem der vorhergehenden Ansprüche, wobei nachgiebige Zungen (61, 62), die in ihrer Mitte durchbohrt sind, um ein Kabel in den Mast einzuführen, dieses Kabel umgeben.

## Claims

1. A deployable mast for a satellite consisting of an inflatable tube (1) stored in an accordion shape (1a) before deployment (1b) and deployable by filling the tube by means of a gas, **characterised in that** it includes a rigidification and deployment-assist device external to the mast, said device including stays (2a, 2b) wound on a reel device (3, 31, 32, 33, 34) at a first one of their ends and attached to the tube at a second one of their ends, said stays unwinding from the reel upon deploying the mast, this device comprising at least one pair of stays disposed at 180° relative to the mast axis, the stays of the pair of stays beingwound on a single reel device (33).

2. The deployable mast according to any of the previous claims, wherein at least some of the stays (2a) are fasten to the free end of the tube becoming the apex of the mast after deployment.

3. The deployable mast according to any of the previous claims, wherein at least some of the stays (2b) are fastened to an intermediate part of the tube.

4. The deployable mast according to any of the previous claims, wherein the rigidification device comprises at least two pairs of stays (21, 22, 21', 22') disposed in planes intersecting at the mast axis.

5. The deployable mast according to any of the previous claims, wherein the stay(s) is or are ropes a composition of which comprises polymers solidifying by UV irradiation or ropes that are rigidifiable by Joule effect polymerisation.

6. The deployable mast according to claim 1 , wherein the reel includes a brake device for keeping stays tensioned upon deploying the mast.

7. The deployable mast according to any of the previous claims, wherein at the base of the mast, stays are held spaced from the mast by arms (50) formed by fixed beams (51) or foldable rods (52) perpendicular or tilted relative to the mast.

8. The deployable mast according to any of the previous claims, wherein at least one spring (71, 72) is disposed either at the top of the stays (71) or at the end of the stay on the reel side (72) or on both sides.

9. The deployable mast according to any of the previous claims, wherein flexible tabs (61, 62) perforated at the middle thereof for passing a cable in the mast surround said cable.
